# EUROPÄISCHE PATENTSCHRIFT

(11) **EP 0 861 177 B1**
(45) Veröffentlichungstag und Bekanntmachung des Hinweises auf die Patenterteilung: **06.03.2002**
(21) Anmeldenummer: 96938048.4
(22) Anmeldetag: 02.11.1996
(51) Int. Cl.: B60T 11/04, F16C 1/22

(54) **VORRICHTUNG ZUR SELBSTTÄTIGEN LÄNGENKORREKTUR VON SEILZÜGEN**
DEVICE FOR AUTOMATICALLY CORRECTING THE LENGTH OF A BOWDEN CABLE
DISPOSITIF DE CORRECTION AUTOMATIQUE DE LA LONGUEUR DE CABLES BOWDEN

(30) Priorität: 20.11.1995 DE 19543170; 08.05.1996 DE 19618422
(43) Veröffentlichungstag der Anmeldung: 02.09.1998
(73) Patentinhaber: KÜSTER & Co. GmbH, 35630 Ehringshausen (DE)
(72) Erfinder: KRUG, Michael, D-35614 A lar (DE); GUTIERREZ, Carmelo, D-35630 Ehringhausen (DE)
(74) Vertreter: Müller, Eckhard, Dr.
(86) Internationale Anmeldenummer: EP9604768
(87) Internationale Veröffentlichungsnummer: WO9718978

(56) Entgegenhaltungen:
- EP-A- 0 048 620
- EP-A- 0 478 725
- EP-A- 0 638 733
- DE-A- 4 109 887

## Beschreibung

Die Erfindung betrifft eine Vorrichtung zur selbsttätigen Längenkorrektur von Seilzügen, insbesondere zur Nachstellung von Bremsseilzügen von Kraftfahrzeugen, mit einer eine Aufnahme aufweisenden Hülse, einem Gehäuse und einer in der Aufnahme verschiebbar geführten Zahnstange, Raststange, wobei die Hülse eine Anlenkung für einen Geber, wie einen Hebel, aufweist und die Stange über einen Seilzug mit einem Nehmer gekoppelt ist.

Derartige Vorrichtungen zur Längenkorrektur von mechanischflexiblen Fernbetätigungen sind in vielfältiger Weise bekannt. Sie dienen zum automatischen Ein- und Nachstellen der Länge des Seilzuges, sobald eine Längung infolge von Verschleiß der Bremseinrichtung oder eine Längung des Seiles aufgrund von Alterung auftritt. Hinsichtlich der Funktion haben sich die bekannten Vorrichtungen durchaus bewährt. Allerdings hat sich gezeigt, daß die bekannten Vorrichtungen hinsichtlich des konstruktiven Aufbaus wie auch hinsichtlich der Handhabung insbesondere bei der Montage bzw. einem Ausbau verbesserungswürdig sind.

Demgegenüber liegt der Erfindung die Aufgabe zugrunde eine Vorrichtung mit den eingangs genannten Merkmalen dahingehend weiterzubilden, daß der konstruktive Aufbau vereinfacht und die Handhabung der Vorrichtung zum Zwecke der Montage bzw. Demontage erleichtert wird.

Diese Aufgabe wird nach der Erfindung bei der Vorrichtung mit den eingangs genannten Merkmalen i. w. dadurch gelöst, daß bei Aktivierung des Gebers die Hülse und die Zahnstange mittels eines Sperrsegmentes aufweisenden Gesperres koppelbar sind und bei Deaktivierung des Gebers die mit einer Vorspannung beaufschlagte Zahnstange zur Kompensation etwaiger im System vorhandener Lose bzgl. der Hülse in Richtung einer Verkürzung der Vorrichtung verschiebbar ist.

Die erfindungsgemäße Vorrichtung weist den Vorteil eines einfachen konstruktiven Aufbaus auf, wobei sämtliche, in dem System vorhandene Lose bei deaktiviertem Geber selbsttätig kompensierbar sind.

Nach einer vorteilhaften Ausgestaltung der Erfindung weist das Gesperre Sperrsegmente auf, die in einer Konuskammer der Hülse gleitend geführt und mittels einer Vorspannung, bspw. einer Druckfeder, in eine Sperrstellung bzgl. der Zahnstange beaufschlagt sind. Aufgrund dieser Ausgestaltung ist eine sichere Kopplung zwischen der Hülse und der Zahnstange bei aktiviertem Geber gewährleistet.

Dabei hat es sich als vorteilhaft erwiesen, daß die Sperrsegmente Rastzähne aufweisen, die in der Sperrstellung des Gesperres in eine Gegenzahnung der Zahnstange eingreifen. Somit ist eine unbeabsichtigte Überführung des Gesperres in die Öffnungsstellung bei einer Aktivierung des Gebers sicher vermieden.

Gemäß einer besonders vorteilhaften, eigenständigen Ausgestaltung der Erfindung ist zwischen dem Gesperre und einem ortsfesten Anschlag auf der Zahnstange eine verschiebbare Hülse geführt, welche bei einer Deaktivierung des Gebers das Gesperre in eine Öffnungsstellung überführt. Der Vorteil dieser Ausgestaltung besteht unter anderem darin, daß das System Geber, Seilzüge, Vorrichtung, Nehmer, im deaktivierten Zustand des Gebers offen, d.h. nicht nur verkürzbar sondern auch verlängerbar ist. Wenn bspw. bei aktiviertem Geber die Nehmerseite infolge z.B. einer Frosteinwirkung blockiert ist, erfolgt nach einer Deaktivierung des Gebers bei einem späteren Lösen der Blockierung des Nehmers auch eine Einstellung der Vorrichtung in Richtung auf eine sozusagen virtuelle Verlängerung des Seilzuges. Hierdurch wird der Nachteil bekannter Nachstelleinrichtungen vermieden, die bei einer Blockierung des Nehmers dazu tendieren, den Seilzug bzw. das System zusätzlich irreversibel zu verkürzen, was zur Folge hat, daß die Vorrichtung zunächst von Hand wieder in den Ausgangszustand überführt werden muß, um eine ordnungsgemäße Betätigung des Systems zu gewährleisten.

Nach einer anderen, alternativen Ausgestaltung der Erfindung ist die innere Hülse mit einem Außengewinde in ein Innengewinde der äußeren Hülse geschraubt, wobei das Gesperre durch Verdrehen der inneren Hülse von der Sperrstellung in die Öffnungsstellung überführbar ist. Zwar ist bei dieser Ausgestaltung ein sogenanntes offenes, d.h. ein verkürzbares wie auch verlängerbares System nicht gegeben. Allerdings erweist sich diese Ausgestaltung insbesondere bei einem Ausbau der Vorrichtung als vorteilhaft und besonders einfach handhabbar, das die innere Hülse mit ihrem Außengewinde in die äußere Hülse mit dem Innengewinde lediglich soweit einzuschrauben ist, bis die Stirnseite der inneren Hülse die Sperrsegmente gegen die Kraft der Druckfeder in die Öffnungsstellung verschiebt. Anschließend läßt sich die Zahnstange auf der Hülse soweit wie für eine Demontage der Vorrichtung erforderlich, herausziehen.

Es hat sich als vorteilhaft erwiesen, daß zwischen der Zahnstange und einem ortsfesten Anschlag eine Druckfeder zur Erzeugung der Vorspannung für die Zahnstange zum selbsttätigen Längenausgleich eingespannt ist.

Von besonderem Vorteil ist nach einem anderen, eigenständigen Merkmal der Erfindung vorgesehen, daß in einem Anlieferungs-bzw. Vormontagezustand der Vorrichtung an dem Seilzug ein Sperrstück lösbar gehalten ist, wobei zwischen der Zahnstange und dem Sperrstück die Druckfeder, i. w. auf ein Kleinstmaß zusammengepreßt, eingespannt ist. In diesem Zustand ist die Vorrichtung auf eine i. w. maximale Länge ausgezogen und die Druckfeder auf i. w. ein Kleinstmaß zusammengepreßt, um das Montieren der Vorrichtung einends mit dem Geber und anderenends mit dem Seilzug an dem Nehmer in einfacher Weise zu ermöglichen.

Von besonderem Vorteil ist das Sperrstück von einem am Seilzug fixierten Nippel gehalten, wobei das Sperrstück mittels einer Drehbewegung von dem Nippel lösbar und gegen den Anschlag verschiebbar ist. Nachdem die Vorrichtung zwischen dem Geber und dem Nehmer montiert ist, wird das Sperrstück einfach gedreht, so daß es außer Eingriff mit dem Nippel gelangt und über diesen Nippel hin zu dem Anschlag aufgrund der Wirkung der Druckfeder gleitet. Anschließend verschiebt die Feder die Raststange hinein in die Hülse, bis alle Lose aus dem System, insbesondere auf der Nehmerseite, aus dem Seilzug herausgenommen sind.

Weitere Ziele, Vorteile, Merkmale und Anwendungsmöglichkeiten der vorliegenden Erfindung ergeben sich aus der nachfolgenden Beschreibung der Ausführungsbeispiele anhand der Zeichnungen.

Es zeigen:
- Figur 1: ein erstes Ausführungsbeispiel der erfindungsgemäßen Vorrichtung im Anlieferungszustand,
- Figur 2: die Vorrichtung der Figur 1 nach Lösen des Sperrstücks und Durchführung der Ersteinstellung,
- Figur 3: die Vorrichtung der Figur 2 bei aktiviertem Geber und
- Figur 4: ein weiteres Ausführungsbeispiel der Erfindung mit einem sogenannten offenen, d.h. nicht nur verkürzbarem sondern auch verlängertem System.

Die Einstellvorrichtung weist einen Bügel 1 o. dgl. auf, welcher bei dem hier gewählten Ausführungsbeispiel an dem Geber, insbesondere dem Betätigungshebel der Handbremse angelenkt ist. Die Anlenkung ist mit Bezugszeichen 2 bezeichnet. Der Bügel 1 ist bspw. in eine Hülse 3 mit einer entsprechenden Aussparung 4 eingesetzt ist. Die Hülse 3 weist eine Konuskammer 5 auf, in welcher Sperrsegmente 6 gleitend geführt sind. Die Sperrsegmente 6 sind mittels einer Druckfeder 7, welche sich an einer Schulter 8 der Hülse 3 abstützt in Sperrstellung bzgl. einer Zahnstange 9 gedrückt. Die Sperrsegmente weisen Rastzähne 10 auf, welche in Sperrstellung die Sperrsegmente 6 in Eingriff mit der Gegenzahnung 11 der Zahnstange 9 gelangen. Die Zahnstange 9 ist mit ihrem freien Ende mit dem Seilzug 12, bspw. über ein Preßstück 13 verbunden.

Zwischen dem Preßstück 13 und einem Sperrstück 14 ist eine Druckfeder 15 eingesetzt. Das Sperrstück 14 stützt sich seinerseits an einem fest mit dem Seil 12 verbundenen Nippel 16 ab. Das Sperrstück 14 ist dabei so ausgestaltet, daß es durch eine Drehbewegung über den Nippel 16 gleiten kann. Dies ist von Bedeutung für den Anlieferungszustand der Nachstelleinrichtung an das Band des Kraftfahrzeugherstellers, wie noch weiter näher beschrieben ist. Weiterhin weist die Einstellvorrichtung eine Hülse 17 mit einem Außengewinde auf, welche in ein Innengewinde der Hülse 3 einschraubbar ist und dabei mit ihrem stirnseitigen Ende 18 gegen die Sperrsegmente 6 gelangt, um diese außer Eingriff mit der Zahnstange 9, also in eine öffnungsstellung zu bringen. Zur besseren Handhabung weist die Hülse 17 eine Rändelung 20 auf.

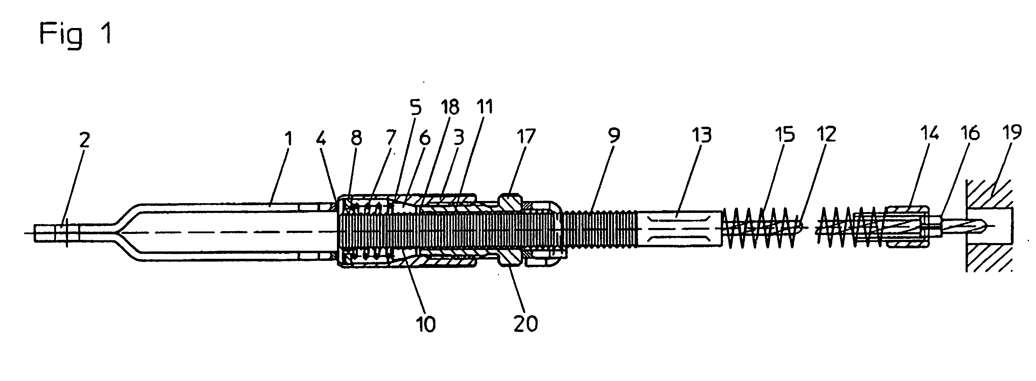

Figur 1 zeigt den Anlieferungszustand der Nachstelleinrichtung an das Band des Kraftfahrzeugherstellers. In diesem Zustand ist die Nachstelleinrichtung auf maximale Länge ausgezogen, um daß Montieren der Nachstelleinrichtung einenends mit dem Betätigungshebel und anderenends mit dem Seilzug 12 an der Bremseinrichtung in einfacher Weise zu ermöglichen. In diesem Falle ist die Feder 15 auf Kleinstmaß zusammengedrückt, wobei das Sperrstück 14 in Anlagestellung mit dem Nippel 16 sich befindet.

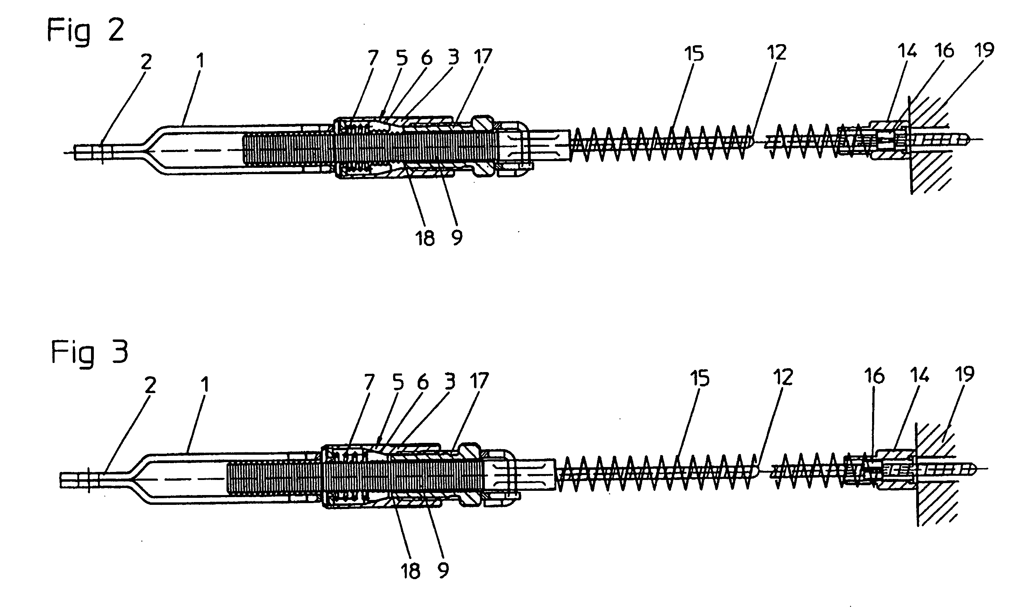

Nachdem die Nachstelleinrichtung mit Seil an dem Kraftfahrzeug montiert ist, wird das Sperrstück 14 gedreht, so daß es außer Eingriff mit dem Nippel 16 gelangt. Dabei entspannt sich die Feder 15, bis das Sperrstück 14 an einem fahrzeugseitigen Anschlag 19 gelangt. Danach verschiebt die Feder die Raststange 9 in die Hülse 3, bis alle Lose auf der Nehmerseite, d.h. auf den Abschnitt zwischen Nachstelleinrichtung und Bremsanlage aus dem Seilzug 12 herausgenommen sind. Dabei rasten die Rastzähne 10 der Sperrsegmente 6 über die Gegenzahnung 11 der Zahnstange 9, indem das Sperrsegment um ein gewisses Maß in der Konuskammer 5 in Richtung des Betätigungshebels verschoben wird. Dieser Zustand ist in Figur 2 dargestellt. Diese Wirkungsweise ergibt sich auch, wenn aufgrund eines Verschleißes der Bremsanlage oder aufgrund von Alterung des Seiles selbst eine Längung des Seiles 12 auftritt. Dabei bewirkt die Feder 15 stets eine Nachstellung in dem Sinne, daß alle Lose aus dem Seilsystem herausgenommen wird.

In Figur 3 ist die Stellung gezeigt, in welcher der Geber aktiviert bzw. der Betätigungshebel der Handbremse angezogen bzw. betätigt wurde. Dabei werden die Rastzähne der Sperrsegmente 6 in die Gegenzahnung 11 der Zahnstange 9 gedrückt, wodurch eine formschlüssige Verbindung zwischen der Hülse 3, Zahnstange 9 und Seil 12 erreicht ist, um die Zugkraft auf die Bremsanlage zu übertragen.

Um das Seilsystem mit Nachstelleinrichtung wieder ausbauen zu können ist das Seilzugsystem auf maximale Länge zu bringen und die Zahnstange 9 aus der Hülse 3 herauszuziehen. Hierzu wird die Hülse 17 mit ihrem Außengewinde in die Hülse 3 soweit eingeschraubt, bis die Stirnseite der Hülse 17 die Sperrsegmente 6 gegen die Kraft der Feder 7 in Richtung des Betätigungshebels verschiebt, wodurch die Rastzähne 10 der Sperrsegmente 6 außer Eingriff mit der Gegenverzahnung 11 der Zahnstange 9 gelangen, das Gesperre in Öffnuhgsstellung überführt ist und die Zahnstange 9 aus der Hülse 3 herausgezogen werden kann.

Bei der dargestellten Ausführungsform wirkt die Nachstelleinrichtung im unbelasteten Zustand bzw. bei deaktiviertem Geber, d.h. bei abgelegtem Hebel der Handbremse, in Richtung einer sozusagen virtuellen Seilverkürzung selbsttätig nachstellend.

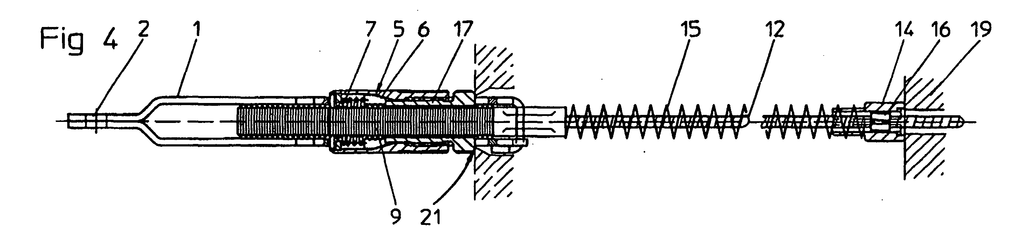

Selbstverständlich ist es jedoch auch möglich, die Hülse 17 als in der Hülse 3 frei verschiebliches Bauteil ohne Außengewinde o. dgl. vorzusehen, mit einem fahrzeugseitigen ortsfesten Anschlag 21, gegen welche die Hülse 17 mit ihrer in Figur 4 rändelseitigen Stirnseite bei Ablegen bzw. Deaktivierung des Betätigungshebels anschlägt, um stets ein Öffnen des Gesperres bzw. der Sperrsegmente 6 in diesem Zustand des deaktivierten Gebers bzw. Betätigungshebels herbeizuführen. In diesem Zustand wird die Zahnstange 9 durch die Feder 12 in die Hülse 3 hineingeschoben, um den Seilzug zu verkürzen, wie in Figur 2 dargestellt. Andererseits kann in diesem Zustand infolge der an den Bremsen befindlichen Rückstellfedern auch eine sozusagen virtuelle Längung des Seilzuges 12 im deaktivierten Zustand des Betätigungshebels erfolgen. Sobald der Hebel wieder aktiviert bzw. angezogen wird, gelangen bei losefreiem Seilsystem die Rastsegmente 6 wieder in die Sperrstellung, d.h. in Formschluß mit der Zahnstange 9. Ein Vorteil dieser Ausführungsform besteht u. a. darin, daß das System im nichtbetätigten Zustand offen, d.h. nicht nur verkürzbar sondern auch verlängerbar ist. Wenn bei betätigter Geberseite die bspw. Nehmerseite infolge Frosteinwirkung blockiert ist, erfolgt nach Überführung des Betätigungshebels der Handbremse bzw. des Gebers in seine Ausgangsstellung bzw. Ablegen des Handbremsbetätigungshebels bei einem späteren Lösen der Blockade der Nehmerseite auch eine Einstellung in entgegengesetzter Richtung im Hinblick auf eine Verlängerung des Seilzuges. Bei einigen bekannten Nachstelleinrichtungen führt ein Blockieren der Nehmerseite dazu, daß die Nachstelleinrichtung irreversibel das Seilsystem zusätzlich zu verkürzen trachtet, mit der Folge, daß die Nachstellvorrichtung erst von Hand wieder in den Ausgangszustand übergeführt werden muß. Dies ist besonders gravierend, da der Fahrzeugführer üblicherweise nicht feststellen kann, ob in kälteren Jahreszeiten das Bremssystem zugefroren ist oder nicht.

### Bezugszeichenliste

- 1 -: Bügel
- 2 -: Anlenkung
- 3 -: Hülse, Gehäuse
- 4 -: Aussparung
- 5 -: Konuskammer
- 6 -: Sperrsegmente
- 7 -: Druckfeder
- 8 -: Schulter
- 9 -: Zahnstange
- 10 -: Rastzahn (von 6)
- 11 -: Gegenzahnung (von 9)
- 12 -: Seilzug
- 13 -: Preßstück
- 14 -: Sperrstück
- 15 -: Druckfeder
- 16 -: Nippel
- 17 -: Hülse
- 18 -: stirnseitiges Ende
- 19 -: Anschlag
- 20 -: Randelung
- 21 -: Anschlag

## Patentansprüche

1. Vorrichtung zur selbsttätigen Längenkorrektur von Seilzügen (12), insbesondere zur Nachstellung von Bremsseilzügen von Kraftfahrzeugen, mit einer eine Aufnahme aufweisenden Hülse (3) und einer in der Aufnahme verschiebbar geführten Zahnstange (9) oder Raststange, wobei die Hülse (3) eine Anlenkung (2) für einen Geber, z.B. einen Hebel, aufweist und die Stange (9) über einen Seilzug (12) mit einem Nehmer gekoppelt ist, **dadurch gekennzeichnet, daß** bei einer Aktivierung des Gebers die Hülse (3) und die Zahnstange (9) mittels eines Sperrsegmentes (6) aufweisenden Gesperres koppelbar sind und bei einer Deaktivierung des Gebers die mit einer Vorspannung beaufschlagte Zahnstange (9) zur Kompensation etwaiger im System vorhandener Lose bzgl. der Hülse (3) in Richtung einer Verkürzung der Vorrichtung verschiebbar ist.

2. Vorrichtung nach Anspruch 1, **dadurch gekennzeichnet, daß** die Sperrsegmente (6) in einer Konuskammer der Hülse (3) gleitend geführt und mittels einer Vorspannung, bspw. einer Druckfeder (7), in eine Sperrstellung bzgl. der Zahnstange (9) beaufschlagt sind.

3. Vorrichtung nach Anspruch 2, **dadurch gekennzeichnet, daß** die Sperrsegmente (6) Rastzähne (10) aufweisen, die in der Sperrstellung des Gesperres in eine Gegenzahnung (11) der Zahnstange (9) eingreifen.

4. Vorrichtung nach einem der vorhergehenden Ansprüche, **dadurch gekennzeichnet, daß** zwischen dem Gesperre und einem ortsfesten Anschlag (21) auf der Zahnstange (9) eine verschiebbare Hülse (17) geführt ist, welche bei einer Deaktivierung des Gebers das Gesperre in eine Öffnungsstellung überführt.

5. Vorrichtung nach einem der Ansprüche 1 bis 3, **dadurch gekennzeichnet, daß** die Hülse (17) mit einem Außengewinde in ein Innengewinde der Hülse (3) geschraubt und das Gesperre durch Verdrehen der inneren Hülse (17) von der Sperrstellung in die öffnungsstellung überführbar ist.

6. Vorrichtung nach einem der vorhergehenden Ansprüche, **dadurch gekennzeichnet, daß** zwischen der Zahnstange (9) und einem ortsfesten Anschlag (19) eine Druckfeder (15) eingespannt ist.

7. Vorrichtung nach einem der 1 Ansprüche 1 bis 5, **dadurch gekennzeichnet, daß** in einem Anlieferungs- bzw. Vormontagezustand der Vorrichtung an dem Seilzug (12) ein Sperrstück (14) lösbar gehalten ist, wobei zwischen der Zahnstange (9) und dem Sperrstück (14) die Druckfeder (15), i. w. auf ein Kleinstmaß zusammengepreßt, eingespannt ist.

8. Vorrichtung nach Anspruch 7, **dadurch gekennzeichnet, daß** das Sperrstück (14) von einem am Seilzug (12) fixierten Nippel (16) gehalten ist, wobei das Sperrstück (14) mittels einer Drehbewegung von dem Nippel (16) lösbar und gegen den Anschlag (19) verschiebbar ist.

## Claims

1. Device for automatic length correction of cable pulls (12), particularly for adjustment of brake cable pulls of motor vehicles, with a sleeve (3) having a receptacle and a toothed rack (9) or detent rack displaceably guided in the receptacle, wherein the sleeve (3) has an articulation point (2) for a transmitting means, for example a lever, and the rack (9) is coupled with a receiving means by way of a cable pull (12), **characterised in that** on activation of the transmitting means the sleeve (3) and the toothed rack (9) can be coupled by means of a locking mechanism having blocking segments (6) and on deactivation of the transmitting means the toothed rack (9), which is subject to a preload, is displaceable with respect to the sleeve (3) in the direction of a shortening of the device for compensation for any slack present in the system.

2. Device according to claim 1, **characterised in that** the blocking segments (6) are slidingly guided in a cone chamber of the sleeve (3) and urged by means of a preload, for example a compression spring (7), into a locked setting with respect to the toothed rack (9).

3. Device according to claim 2, **characterised in that** the blocking segments (6) have detent teeth (10) which engage in a counter toothing (11) of the toothed rack (9) in the locked setting of the locking mechanism.

4. Device according to one of the preceding claims, **characterised in that** a displaceable sleeve (17), which on deactivation of the transmitting means transfers the locking mechanism into an open setting, is guided on the toothed rack (9) between the locking mechanism and a stationary abutment (21).

5. Device according to one of claims 1 to 3, **characterised in that** the sleeve (17) is screwed by an external thread into an internal thread of the sleeve (3) and the locking mechanism can be transferred from the locked setting into the open setting by rotation of the inner sleeve (17).

6. Device according to one of the preceding claims, **characterised in that** a compression spring (15) is biassed between the toothed rack (9) and a stationary abutment (19).

7. Device according to one of claims 1 to 5, **characterised in that** a blocking member (14) is detachably held at the cable pull (12) in a delivery or preassembly state, wherein the compression spring (15) compressed substantially to a smallest dimension is biassed between the toothed rack (9) and the blocking member (14).

8. Device according to claim 7, **characterised in that** the blocking member (14) is held by a nipple (16) fixed to the cable pull (12), wherein the blocking member (14) is detachable from the nipple (16) by means of a rotational movement and displaceable against the abutment (19).

## Revendications

1. Dispositif de correction automatique de la longueur de câbles de commande (12), en particulier pour le rattrapage de jeu de câbles de commande de freins de véhicules automobiles, comprenant une douille (3) comportant un logement et une crémaillère (9) ou crémaillère d'arrêt guidée dans le logement, la douille (3) comportant une articulation (2) pour un émetteur, par exemple un levier, et la crémaillère (9) étant couplée à un récepteur par l'intermédiaire d'un câble de commande (12), **caractérisé en ce que**, lors d'une activation de l'émetteur, la douille (3) et la crémaillère (9) peuvent être accouplées l'une à l'autre par l'intermédiaire d'un mécanisme d'arrêt comportant un segment de blocage (6), et qu'en cas de désactivation de l'émetteur, la crémaillère (9) précontrainte peut être déplacée par rapport à la douille (3) dans le sens d'un raccourcissement du dispositif, de manière à compenser le jeu éventuel existant dans le système.

2. Dispositif selon la revendication 1, **caractérisé en ce que** les segments de blocage (6) sont guidés de façon coulissante dans une chambre conique de la douille (3) et sont précontraints, par la contrainte d'un ressort de pression (7) par exemple, en direction d'une position de blocage par rapport à la crémaillère (9).

3. Dispositif selon la revendication 2, **caractérisé en ce que** les segments de blocage (6) comportent des dents d'arrêt (10) qui, en position de blocage du mécanisme d'arrêt, s'engagent dans une denture conjuguée (11) de la crémaillère (9).

4. Dispositif selon l'une des revendications précédentes, **caractérisé en ce qu'**une douille coulissante (17) est guidée sur la crémaillère (9), entre le mécanisme d'arrêt et une butée stationnaire (21), douille qui, lorsque l'émetteur est désactivé, amène le mécanisme d'arrêt dans une position d'ouverture.

5. Dispositif selon l'une des revendications 1 à 3, **caractérisé en ce que** la douille (17) est vissée, par un filetage extérieur, dans un filetage intérieur de la douille (3), et que le mécanisme d'arrêt peut être amené de la position de blocage en position d'ouverture grâce à une rotation de la douille intérieure (17).

6. Dispositif selon l'une des revendications précédentes, **caractérisé en ce qu'**un ressort de pression (15) est tendu entre la crémaillère (9) et une butée stationnaire (19).

7. Dispositif selon l'une des revendications 1 à 5, **caractérisé en ce que**, dans une condition de livraison ou d'attente de montage du dispositif, un élément de blocage (14) est maintenu de façon détachable sur le câble de commande (12), le ressort de pression (15), qui est sensiblement comprimé à sa cote minimale, étant tendu entre la crémaillère (9) et l'élément de blocage (14).

8. Dispositif selon la revendication 7, **caractérisé en ce que** l'élément de blocage (14) est maintenu par une bague (16) fixée sur le câble de commande (12), l'élément de blocage (14) pouvant être désolidarisé de la bague (16) grâce à un mouvement de rotation, et déplacé jusqu'en contact avec une butée (19).
